# EUROPEAN PATENT SPECIFICATION

(11) **EP 0 465 801 B1**
(45) Date of publication and mention of the grant of the patent: **12.01.1994**
(21) Application number: 91108145.3
(22) Date of filing: 21.05.1991
(51) Int. Cl.: A23P 1/08, A23L 1/36, A23G 9/02, A23G 3/00

(54) **Coating composition**
Überzugszusammensetzung
Composition de revêtement

(30) Priority: 10.07.1990 US 550457
(43) Date of publication of application: 15.01.1992
(73) Proprietor: SOCIETE DES PRODUITS NESTLE S.A., 1800 Vevey (CH)
(72) Inventor: Adams, Robert Michael, Sherman Oaks, CA 91403 (US); Melachouris, Nicholas, Westlake Village, CA 91361 (US); Tonner, George F., Simi Valley, CA 93063 (US); Vadehra, Dharam Vir, New Milford, Con. 06776 (US)

(56) References cited:
- FR-A- 2 117 506
- US-A- 4 497 800

## Description

The present invention relates to an edible moisture barrier coating which reduces the migration of water between the components in a heterogeneous food system.

In heterogeneous food products it is difficult to prevent moisture migration from the high water content components to the lower water content components and this causes the latter to become undesirably soft and moist. Edible coatings are known to retard this moisture transfer within foods and such coatings are often emulsions prepared from various protein/fat combinations.

FR-A-2117506 describes the coating of foods with a combination of prolamines and amino acids.

We have found surprisingly that by using a coating prepared from a protein/fat mixture in which the protein is a protein isolate capable of forming a film, a significantly increased level of functionality is imparted to the edible barrier coating.

Accordingly the present invention provides an edible moisture barrier coating comprising from 70 to 95% of an aqueous solution of a protein isolate capable of forming a film and 30 to 5% of a mixture of a saturated lipid and emulsifier containing an amount of emulsifier from 5 to 30% based on the weight of the lipid, the lipid having a melting point higher than 30°C and the emulsifier containing one or more diacetyl tartaric acid esters of monoglycerides.

The aqueous solution of the protein isolate preferably has a concentration of from 1 to 50% or above, preferably from 8 to 40%. Any protein isolate that is capable of forming a film may be used to form the barrier coating for example, whey protein, caseinate, egg albumin or milk protein. The protein isolate is preferably purified and the greater the purity the better will be the film forming property and hence the barrier.

United States Patent No. 4218490 describes the use of a surface active protein agent in a process for preparing edible foodstuff materials containing water wherein the surface-active protein agent contains 90% or more by weight of protein and which has been prepared by extraction from a surface-active protein source by ion-exchange interaction with an ion-exchange material followed by recovery from the ion-exchange material. The isolation of protein from protein sources by a process of ion-exchange extraction described in USP 4218490 results in a protein isolate which is usually concentrated and dried and, when the protein isolate is capable of forming a film,it may be used in this invention. It should be understood that the protein isolate of this invention may be prepared by any of the methods described in USP 4218490 and whey protein isolate thus prepared is particularly advantageous.

The particle size of the coating may be from 5 to 30, preferably from 10 to 20 and especially from 7 to 15 microns.

The saturated lipid preferably contains fatty acid chains having from 10 to 20 and preferably from 12 to 18 carbon atoms. From an organoleptic point of view it is preferable that not more than 15 to 20% by weight of the lipids contain fatty acid chains having from 16 to 18 carbon atoms. Fats containing fatty acid chains having 12 carbon atoms are particularly desirable.

Preferably, the emulsifier contains also an acetylated monoglyceride, and/or one or more mono- or diglycerides.

The mono- and diglycerides of the emulsifier are conveniently derived from saturated fat feed stocks, preferably containing fatty acid chains having from 12 to 20 carbon atoms.

Preferably, a polyalcohol such as glucose or a polyglycol e.g. glycerol is present in the coating to prevent the protein from becoming brittle and thus to prevent cracking or breaking of the film.

The present invention also provides a method of preparing an edible moisture barrier coating which comprises homogenising a mixture comprising from 70 to 95% of an aqueous solution of a protein isolate capable of forming a film and 30 to 5% of a mixture of a saturated lipid and emulsifier containing an amount of emulsifier from 5 to 30% based on the weight of the lipid, the lipid having a melting point higher than 30°C and the emulsifier containing one or more diacetyl tartaric acid esters of monoglycerides.

The homogenisation may be of the "high shear" type in which the temperature is conveniently from 30° to 50°C and the duration of the homogenisation may be from 1 minute to 30 minutes. The homogenisation can also be achieved by passing a well-stirred mixture of the ingredients through a homogeniser with the normal setting for the homogenisation of milk (two stage - 1st stage 2500 psi, 2nd stage 500 psi) where the temperature is held so that the oil will not solidify before homogenisation is complete.

The present invention also provides a process for coating a food substrate to be formed into a heterogeneous product with a food component of higher water activity which comprises applying a solution of the above described edible moisture barrier coating onto the food substrate in an amount effective to retard moisture migrating from the food component with the higher water activity into the food substrate when formed into the heterogeneous food product.
The amount of coating on the food substrate is usually within the range of from 2% to 15% and preferably from 5% to 12% by weight based on the weight of the food substrate on a dry weight basis.

The coating may be applied onto the food component by various conventional techniques apparent to those skilled in the art e.g. brushing, dipping or spraying. The coating may be applied, if desired, by heat-set or cold-set methods.

In a heat-set method, the coating may be applied at a temperature from, for instance, 30° to 50°C and preferably from 35° to 45°C conveniently in a fluid bed. The duration of the application may conveniently be from 20 to 60 minutes.

In a cold-set method, the coating may be applied at a temperature from 0°C to 10°C, preferably from 4°C to 8°C conveniently in a pan. The duration of coating may conveniently be from 20 to 60 minutes. After coating, the coated food component may be placed in a freezer at a temperature less than -35°C for final setting of the coating.

The coating of this invention may be applied to a variety of substrates e.g. cake, chocolate, almonds, pizza, pasta or vegetables.

The present invention further provides a method for preparing a heterogeneous food product containing components of different water activities which comprises applying a solution of the above described edible moisture barrier coating onto the food component with the lower water activity and then forming the two food components into the heterogeneous food product wherein the amount of coating is effective to retard moisture migration from the food component with the higher water activity into the coated food component.

The heterogeneous food product may be formed, for example, by incorporating one component into the other or by coating one component onto the other component.

The coating of this invention may be used in frozen and refrigerated foods such as pizzas, French bread pizza, frozen desserts and ice cream.

The following Examples further illustrate the present invention. Parts and percentages are given by weight.

### Example 1

The following ingredients were homogenised at 40°C for 5 minutes to give an edible coating:
- 9: parts of a 30% solution of whey protein isolate sold under the Trade Name BI-PRO
- 0.8: parts of a saturated C₁₂-C₁₈ fat sold under the Trade Name Durkee Satina 72 (a hard fat)
- 0.1: part of acetylated monoglyceride sold under the Trade Name Grinsted Cetodan 50
- 0.1: part of a mixture of diacetyltartaric acid esters of monoglycerides together with mono- and diglycerides derived from saturated fat feed stocks sold under the Trade Name Grinsted Emulsifier 901.

The product obtained was an emulsion with an average particle size of 10 microns.

### Example 2

A coating emulsion was prepared by homogenising the following ingredients at 40°C for 10 minutes.
- 837.6: parts of a 10% solution of whey protein isolate sold under the Trade Name BI-PRO,
- 109.62: parts Satina 72
- 28.93: parts Cetodan 50
- 13.70: parts Grinsted Emulsifier 901
- 10.00: parts Glycerol

1'600 parts of chopped almonds were place in a fluidised bed at 40°C and the above coating emulsion was sprayed on at an atomising air pressure of 12 psi with a pump over a period of 40 minutes after which time the amount of coating on the almonds was 7.5% by weight on a dry weight basis.

Almonds coated by this technique were mixed into ice cream and the coated almonds retained their texture for 6 weeks.

As a comparison, a control ice cream containing uncoated almonds was also prepared and the control almonds became soft within one week.

### Example 3

4'000 parts of chopped almonds were sprayed in a coating pan at 6°C with the coating emulsion of Example 2 at an atomising air pressure of 30 psi over a period of 30 minutes after which time the amount of coating on the almonds was 9% by weight on a dry weight basis. After coating, the almonds were placed in a -40°C freezer for final setting of the coating.

## Claims

1. An edible moisture barrier coating comprising from 70 to 95% of an aqueous solution of a protein isolate capable of forming a film and 30 to 5% of a mixture of a saturated lipid and emulsifier containing an amount of emulsifier from 5 to 30% based on the weight of the lipid, the lipid having a melting point higher than 30°C and the emulsifier containing one or more diacetyl tartaric acid esters of monoglycerides.

2. An edible moisture barrier coating according to claim 1 wherein the protein isolate is whey protein, caseinate, egg albumin or milk protein.

3. An edible moisture barrier coating according to claim 1 wherein the average particle size is from 5 to 30 microns.

4. An edible moisture barrier coating according to claim 1 wherin the saturated lipid contains fatty acid chains having from 10 to 20 carbon atoms.

5. An edible moisture barrier coating according to claim 1 wherein not more than 20% by weight of the lipids contain fatty acid chains having from 16 to 18 carbon atoms.

6. An edible moisture barrier coating according to claim 1 wherein the emulsifier also contains an acetylated monoglyceride and/or one or more mono- or diglycerides.

7. An edible moisture barrier coating according to claim 6 wherein the mono- and diglycerides of the emulsifier are derived from saturated fat feed stocks.

8. A process of preparing an edible moisture barrier coating which comprises homogenising from 70 to 95% of an aqueous solution of a protein isolate capable of forming a film and 30 to 5% of a mixture of a saturated lipid and emulsifier containing an amount of emulsifier from 5 to 30% based on the weight of the lipid, the lipid having a melting point higher than 30°C and the emulsifier containing one or more diacetyl tartaric acid esters of monoglycerides.

9. A process for coating a food substrate to be formed into a heterogeneous product with a food component of higher water activity which comprises applying a solution of the edible moisture barrier coating claimed in claim 1 onto the food substrate in an amount effective to retard moisture migrating from the food component with the higher water activity into the food substrate when formed into the heterogeneous food product.

10. A process according to claim 9 wherein the amount of coating on the food substrate is from 2% to 15% by weight based on the weight of the food substrate on a dry weight basis.

11. A process according to claim 9 wherein the coating is applied by a heat-set or a cold-set method.

12. A method for preparing a heterogeneous food product containing components of different water activities which comprises applying a solution of the edible moisture barrier coating claimed in claim 1 onto the food component with the lower water activity and then forming the two food components into the heterogenous food product wherein the amount of coating is effective to retard moisture migration from the food component with the higher water activity into the coated food component.

13. A coated food substrate to be formed into a heterogeneous product with a food component of higher water activity, comprising the edible moisture barrier coating of claim 1 in an amount effective to retard moisture migrating from the food component with the higher water activity into the food substrate when formed into the heterogeneous food product.

14. A heterogeneous food product containing components of different water activities and the edible moisture barrier coating according to claim 1 coated onto the food component with the lower water activity, and wherein the amount of coating is effective to retard moisture migration from the food component with the higher water activity into the coated food component.

## Patentansprüche

1. Eßbarer Feuchtigkeits-Sperrschichtüberzug, welcher 70 bis 95 % einer wäßrigen Lösung eines zur Filmbildung befähigten Proteinisolates und 30 bis 5 % eines Gemisches aus einem gesättigten Lipid und einem Emulgator umfaßt, welches Gemisch eine Menge des Emulgators von 5 bis 30 %, bezogen auf das Gewicht des Lipides, enthält, wobei das Lipid einen höheren Schmelzpunkt als 30°C hat, und wobei der Emulgator einen oder mehrere Diacetylweinsäureester von Monoglyceriden enthält.

2. Eßbarer Feuchtigkeits-Sperrschichtüberzug nach Anspruch 1, worin das Proteininsolat Molkeprotein, Caseinat, Eialbumin oder Milchprotein ist.

3. Eßbarer Feuchtigkeits-Sperrschichtüberzug nach Anspruch 1, worin die durchschnittliche Teilchengröße 5 bis 30 µm beträgt.

4. Eßbarer Feuchtigkeits-Sperrschichtüberzug nach Anspruch 1, worin das gesättigte Lipid Fettsäureketten mit 10 bis 20 Kohlenstoffatomen enthält.

5. Eßbarer Feuchtigkeits-Sperrschichtüberzug nach Anspruch 1, worin nicht mehr als 20 Gew.-% des Lipides Fettsäureketten mit 16 bis 18 Kohlenstoffatomen enthalten.

6. Eßbarer Feuchtigkeits-Sperrschichtüberzug nach Anspruch 1, worin der Emulgator auch ein acetyliertes Monoglycerid und/ oder ein oder mehrere Mono- oder Diglyceride enthält.

7. Eßbarer Feuchtigkeits-Sperrschichtüberzug nach Anspruch 1, worin die Mono- und Diglyceride des Emulgators aus Ausgangsmaterialien mit einem Gehalt an gesättigtem Fett stammen.

8. Verfahren zur Herstellung eines eßbaren Feuchtigkeits-Sperrschichtüberzuges, welches ein Homogenisieren von 70 bis 95 % einer wäßrigen Lösung eines zur Filmbildung befähigten Proteinisolates und 30 bis 5 % eines Gemisches aus einem gesättigten Lipid und einem Emulgator, welches Gemisch eine Menge des Emulgators von 5 bis 30 %, bezogen auf das Gewicht des Lipides, enthält, wobei das Lipid einen höheren Schmelzpunkt als 30°C hat, und wobei der Emulgator einen oder mehrere Diacetylweinsäureester von Monoglyceriden enthält, umfaßt.

9. Verfahren zum Überziehen eines Nahrungsmittelsubstrates, welches zusammen mit einer Nahrungsmittelkomponente von höherer Wasseraktivität zu einem heterogenen Produkt verarbeitet werden soll, welches ein Aufbringen einer Lösung des im Anspruch 1 beanspruchten eßbaren Feuchtigkeits-Sperrschichtuberzuges auf das Nahrungsmittelsubstrat in einer Menge umfaßt, welche dahingehend wirksam ist, daß sie das Wandern von Feuchtigkeit von der Nahrungsmittelkomponente mit der höheren Wasseraktivität in das Nahrungsmittelsubstrat, nachdem dasselbe in das heterogene Nahrungsmittelprodukt eingearbeitet worden ist, verzögert.

10. Verfahren nach Anspruch 9, wobei die Menge des Überzuges auf dem Nahrungsmittelsubstrat 2 Gew.-% bis 15 Gew.-%, bezogen auf das Gewicht der Trockensubstanz des Nahrungsmittelsubstrates, beträgt.

11. Verfahren nach Anspruch 9, wobei der Überzug durch ein Verfahren des Heißfixierens oder des Kaltabbindens aufgebracht wird.

12. Verfahren zur Herstellung eines heterogenen Nahrungsmittelproduktes, welches Komponenten von unterschiedlichen Wasseraktivitäten enthält, welches ein Aufbringen einer Lösung des im Anspruch 1 beanspruchten eßbaren Feuchtigkeits-Sperrschichtuberzuges auf die Nahrungsmittelkomponente mit der niedrigeren Wasseraktivität und anschließend ein Verarbeiten der beiden Nahrungsmittelkomponenten zu dem heterogenen Nahrungsmittelprodukt umfaßt, wobei die Menge des Überzuges dahingehend wirksam ist, daß sie das Wandern von Feuchtigkeit von der Nahrungsmittelkomponente mit der höheren Wasseraktivität in die überzogene Nahrungsmittelkomponente verzögert.

13. Überzogenes Nahrungsmittelsubstrat, welches zusammen mit einer Nahrungsmittelkomponente von höherer Wasseraktivität zu einem heterogenen Produkt verarbeitet werden soll, und welches den eßbaren Feuchtigkeits-Sperrschichtüberzug gemäß Anspruch 1 in einer Menge enthält, welche dahingehend wirksam ist, daß sie das Wandern von Feuchtigkeit von der Nahrungsmittelkomponente mit der höheren Wasseraktivität in das Nahrungsmittelsubstrat, nachdem dasselbe in der heterogene Nahrungsmittelprodukt eingearbeitet worden ist, verzögert.

14. Heterogenes Nahrungsmittelprodukt, welches Komponenten von unterschiedlichen Wasseraktivitäten und den eßbaren Feuchtigkeits-Sperrschichtüberzug nach Anspruch 1 als Überzug auf der Nahrungsmittelkomponente mit der niedrigeren Wasseraktivität enthält, und in welchem die Menge des Überzuges dahingehend wirksam ist, daß sie das Wandern von Feuchtigkeit von der Nahrungsmittelkomponente mit der höheren Wasseraktivität in die überzogene Nahrungsmittelkomponente verzögert.

## Revendications

1. Enrobage comestible servant de barrière à l'humidité, comprenant 70 à 95 % d'une solution aqueuse d'un isolat protéique capable de former un film et 30 à 5 % d'un mélange d'un lipide saturé et d'un émulsionnant, contenant une quantité d'émulsionnant de 5 à 30 % sur la base du poids du lipide, le lipide ayant un point de fusion supérieur à 30°C et l'émulsionnant contenant un ou plusieurs esters d'acide diacétyltartrique de monoglycérides.

2. Enrobage comestible servant de barrière à l'humidité suivant la revendication 1, dans lequel l'isolat protéique consiste en protéine de petit-lait, caséinate, albumine d'oeuf, protéine de lait.

3. Enrobage comestible servant de barrière à l'humidité suivant la revendication 1, dans lequel le diamètre moyen de particules va de 5 à 30 micromètres.

4. Enrobage comestible servant de barrière à l'humidité suivant la revendication 1, dans lequel le lipide saturé contient des chaînes d'acides gras ayant 10 à 20 atomes de carbone.

5. Enrobage comestible servant de barrière à l'humidité suivant la revendication 1, dans lequel une quantité non supérieure à 20 % en poids des lipides contient des chaînes d'acides gras ayant 16 à 18 atomes de carbone.

6. Enrobage comestible servant de barrière à l'humidité suivant la revendication 1, dans lequel l'émulsionnant contient également un monoglycéride acétylé et/ou un ou plusieurs mono- ou diglycérides.

7. Enrobage comestible servant de barrière à l'humidité suivant la revendication 6, dans lequel les mono- et diglycérides de l'émulsionnant sont dérivés de charges de matières grasses saturées.

8. Procédé de préparation d'un enrobage comestible servant de barrière à l'humidité, qui comprend l'homogénéisation de 70 à 95 % d'une solution aqueuse d'un isolat protéique capable de former un film et de 30 à 5 % d'un mélange d'un lipide saturé et d'un émulsionnant, contenant une quantité d'émulsionnant de 5 à 30 % sur la base du poids du lipide, le lipide ayant un point de fusion supérieur à 30°C et l'émulsionnant contenant un ou plusieurs esters d'acide diacétyltartrique de monoglycérides.

9. Procédé d'enrobage d'un substrat alimentaire à transformer en un produit hétérogène avec un constituant alimentaire ayant une plus forte activité d'eau, qui comprend l'application d'une solution de l'enrobage comestible servant de barrière à l'humidité suivant la revendication 1 sur le substrat alimentaire, en une quantité efficace pour retarder la migration d'humidité du constituant alimentaire à plus forte activité d'eau dans le substrat alimentaire de la transformation en le produit alimentaire hétérogène.

10. Procédé suivant la revendication 9, dans lequel la quantité d'enrobage sur le substrat alimentaire va de 2 % à 15 % en poids, sur la base du poids du substrat alimentaire, en poids sec.

11. Procédé suivant la revendication 9, dans lequel l'enrobage est appliqué par un procédé de prise à chaud ou de prise à froid.

12. Procédé de préparation d'un produit alimentaire hétérogène contenant des constituants ayant des activités d'eau différentes, qui comprend l'application d'une solution de l'enrobage comestible servant de barrière à l'humidité suivant la revendication 1 sur le constituant alimentaire ayant la plus faible activité d'eau, puis la transformation des deux constituants alimentaires en le produit alimentaire hétérogène, dans lequel la quantité d'enrobage est efficace pour retarder la migration d'humidité du constituant alimentaire ayant la plus forte activité d'eau dans le constituant alimentaire enrobé.

13. Substrat alimentaire enrobé destiné à être transformé en un produit hétérogène avec un constituant alimentaire ayant une plus forte activité d'eau, comprenant l'enrobage comestible servant de barrière à l'humidité suivant la revendication 1, en une quantité efficace pour retarder la migration d'humidité du constituant alimentaire ayant la plus forte activité d'eau dans le substrat alimentaire lors de la transformation en le produit alimentaire hétérogène.

14. Produit alimentaire hétérogène contenant des constituatns ayant des activités d'eau différentes et l'enrobage comestible servant de barrière à l'humidité suivant la revendication 1, enrobant le constituant alimentaire ayant la plus faible activité d'eau, et dans lequel la quantité d'enrobage est efficace pour retarder la migration d'humidité du constituant alimentaire ayant la plus forte activité d'eau dans le constituant alimentaire enrobé.
